Europäisches Patentamt

**European Patent Office**

**Office européen des brevets**

(19)

(11) Publication number: **0 000 517**
**B1**

# EUROPEAN PATENT SPECIFICATION

(12)

(45) Date of publication of patent specification: **13.05.81**

(51) Int. Cl.³: **F 16 J 15/32**

(21) Application number: **78100392.6**

(22) Date of filing: **13.07.78**

(54) Sealing cup.

(30) Priority: **15.07.77 JP 95011/77**

(43) Date of publication of application:
**07.02.79 Bulletin 79/3**

(45) Publication of the grant of the European patent:
**13.05.81 Bulletin 81/19**

(84) Designated Contracting States:
**DE FR GB**

(56) References cited:
**GB - A - 944 921**
**US - A - 2 815 995**

(73) Proprietor: **AISIN SEIKI KABUSHIKI KAISHA**
**2-1, Asahi-machi**
**Kariya-shi Aichi-ken (JP)**

(73) Proprietor: **KABUSHIKI KAISHA TOYOTA CHUO KENKYUSHO**
**2-12, Hisakata Tenpaku-ku**
**Nagoya-shi Aichi-ken (JP)**

(73) Proprietor: **TOYOTA JIDOSHA KOGYO KABUSHIKI KAISHA**
**1, Toyota-cho**
**Toyota-shi Aichi-ken (JP)**

(72) Inventor: **HASEGAWA, JUNZO**
**47-254, Chaya, Kyowa-cho**
**Obu-shi, Aichi-ken (JP)**
Inventor: **Yamada, Masatoshi**
**84-1,Aza Otokoyama, Narumi-cho Midori-ku**
**Nagoya-shi, Aichi-ken (JP)**
Inventor: **Nakamura, Kaoru**
**28-56, Kannon Nishibessho-cho**
**Anjo-shi, Aichi-ken (JP)**
Inventor: **Yasuda, Eiichi**
**341, Aza Kawanishi, Oaza Seko Moriyama-ku**
**Nagoya-shi, Aichi-ken (JP)**

(74) Representative: **Tiedtke, Harro, Dipl.-Ing. et al,**
**Patentanwälte Tiedtke-Bühling- Kinne-Grupe-Pellmann Bavariaring 4**
**D-8000 München 2 (DE)**

Courier Press, Leamington Spa, England.

Sealing Cup

## Background of the Invention
### Field of the Invention

This invention generally relates to a sealing cup as described on the preamble of claim 1 and adapted for use in vehicular devices, and more particularly to improvements in a sealing cup to be mounted on any piston and cylinder for producing a fluid pressure and for fluidtightly sealing the same.

### Description of the Prior Art

In vehicles, lots of devices have been employed for pressurizing the fluid in which a piston fitted within the cylinder and a cup mounted on the piston constitute a cylinder chamber to be pressurized by the relative movement of the piston and the cylinder. In the field of brake devices, too, various improvements have been imparted to a sealing or piston cup thereof (hereinafter simply referred to as brake cup) in order to increase the sealing effect from the view point of safety. As a result, the requirement for the sealing effect of the brake cup has been satisfied.

Nowadays, a new requirement of the vehicle driver is to improve a foot feeling upon depression of the brake pedal. That is to say, the brake device of these days has to satisfy the following requirements to provide an improved brake cup; that the brake pedal will be smoothly depressed with little resistance and that the vehicle can be stopped by a small depression of the brake pedal.

More specifically, one of the major drawbacks of the conventional brake cup is, although satisfactory as regards the sealing, that it is obliged to increase the resistance of slide due to shortage of the oil film formed between the slide surfaces. Therefore, a large foot force is necessary to pressurize the brake fluid, causing a poor pressurizing efficiency of brake fluid. In addition, a stable movement of the piston provided with the conventional brake cup will not be secured due to possible vibration like stickslip vibration with the result of unstable brake application.

### Summary of the Invention

Therefore, it is the object of the invention to provide a sealing cup which may obviate the difficulties on the conventional one and in which the slide resistance thereof to a cylinder or a piston may be decreased to thereby improve the pressurizing efficiency of fluid within the cylinder and secure a stable movement of the piston and increase durability.

This object is solved by the characterized features of claim 1. Thus, the lubrication of oil is increased and the oil film is formed on the sliding surfaces of the cylinder or the piston thereby decreasing the slide resistance. Apart from the obtained reduction of the radially acting pressure, this effect is achieved in particular by the fact that, in view of the sealing cup moving against the liquid, the liquid is forcibly pressed into the wedge and lubricates the sealing surface, with the sealing cup always moving towards the surface wetted by the liquid.

It is known (US—PS 2 815 995) to provide a sealing cup, being substantially like that of the preamble of claim 1, with an inclined portion, to provide for an end portion, that tilts inwardly from the cylinderwall upon assembly. This is done in case of cups made in a two-piece mould that causes some flash around the end of the lips. Because of this inward tilting of the inclined portion the flash need only be superficially trimmed away; any flash remaining around the lip of the cup will not adversely affect the sealing action. In the disclosed embodiment the lip is disposed at the trailing end of the cup.

Further improvements may be achieved by means of the features of the subclaims.

The above and additional objects and features of the invention will be more fully appreciated to those skilled in the art from a consideration of the following detailed explanation of preferred embodiments of the invention when taken in conjunction with the accompanying drawings.

### Brief Description of the Drawings

In the drawings:

Figs. 1 and 2 are sectional views of conventional piston cups an upper half of each of which is shown for simplicity when unmounted,

Figs. 3 and 4 are views similar to Figs. 1 and 2 but showing the conventional piston cups fitted between the piston and the cylinder;

Fig. 5 is a sectional view of one embodiment of a piston cup in accordance with the invention an upper half of which is shown for simplicity when unmounted;

Fig. 6 is a view similar to Fig. 5 but showing the piston cup of the invention when fitted between the piston and the cylinder;

Figs. 7(A) to 7(C) show explanatory cross sections of the piston cup according to the invention wherein the inclined portion angle thereof to the cylinder axis is 5°;

Figs. 8(A) to 8(C) are views similar to Figs. 7(A) to 7(C) but wherein the inclined portion angle to the cylinder axis is 10°;

Fig. 9(A) is schematic cross section;

Fig. 9(B) is a graph showing the range of the inclined portion angles of the piston cup to the cylinder axis;

Fig. 10 is a graph showing the relationship between the slide resistance and the sliding speed with the inclined portion angles of the piston cup to the cylinder being different;

Fig. 11 is a graph showing the relationship between the fluid pressure and the piston stroke;

Fig. 12 is a graph showing the relationship between the slide resistance and the piston stroke thereby comprising the piston cup of the invention with the conventional piston cups shown in Figs. 1 and 2;

Fig. 13 is a cross section of a brake master cylinder in which the piston cups are used;

Fig. 14 is a cross-section of the piston cup of the invention adapted for use as a secondary cup of the brake master cylinder of Fig. 13;

Fig. 15 is a cross section of the piston cup of the invention adapted for use as a primary cup of the brake master cylinder of Fig. 13;

Fig. 16 is a sectional view of another embodiment of the invention.

*Detailed Explanation of the Invention*

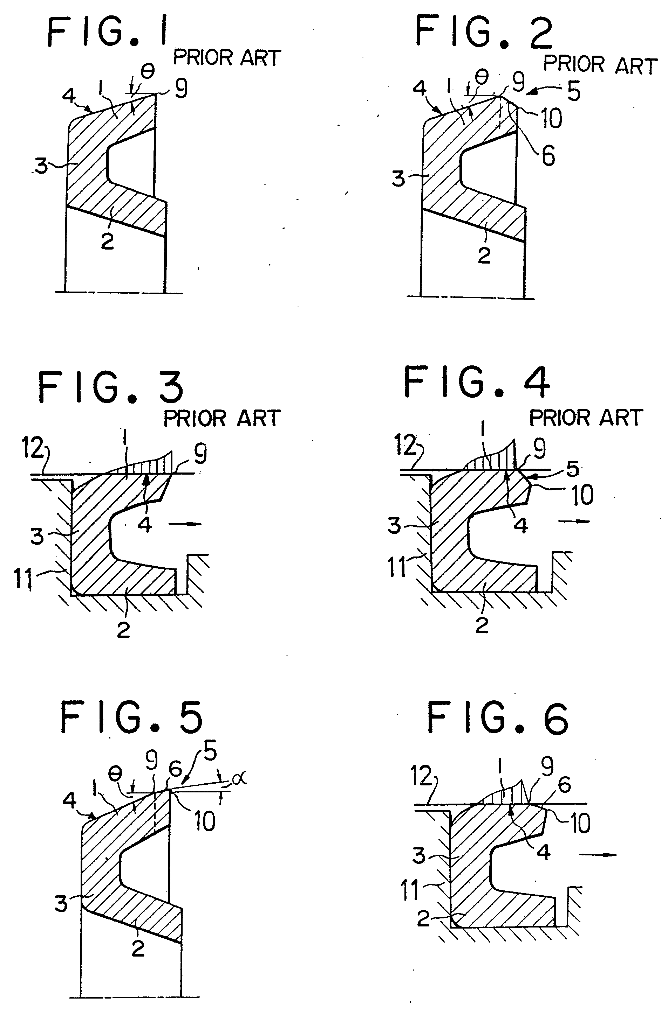

Referring first to Figs. 1 to 4 wherein so-called ring cups are illustrated; cups of Figs. 1 and 3 are called S.A.E type while the cups of Figs. 2 and 4 are called Opel type. Each of these conventional ring cups comprises an outer lip 1 substantially similar to the frustum of a cone, an inner lip 2, and a base 3. S.A.E type cup of Figs. 1 and 3 comprises a tip 9 at the maximum diameter portion of the outer lip 1 at which the maximum pressure is applied by contact of the cup with a cylinder 12. The Opel type of Figs. 2 and 4 similarly comprises the maximum pressure portion 9 at the maximum diameter portion thereof at its leading portion 5 and an annular inclined portion 6 that is flash free and smooth at its leading edge 10 and has a gradually decreasing diameter the angle to the cylinder axis being around 30°. After fitted to a piston 11 and the cylinder 12 as shown in Figs. 3 and 4, these cups are moved to the direction indicated by the arrow upon movement of the piston 11 with the slide resistance being produced between a sealing surface 4 of the outer lip 1 and the cylinder 12 because there is no provision to provide clearance in the case of the S.A.E type cup as shown in Fig. 3, thereby causing the sealing surface 4 to be brought into direct contact with the cylinder 12 and increasing the slide resistance therebetween.

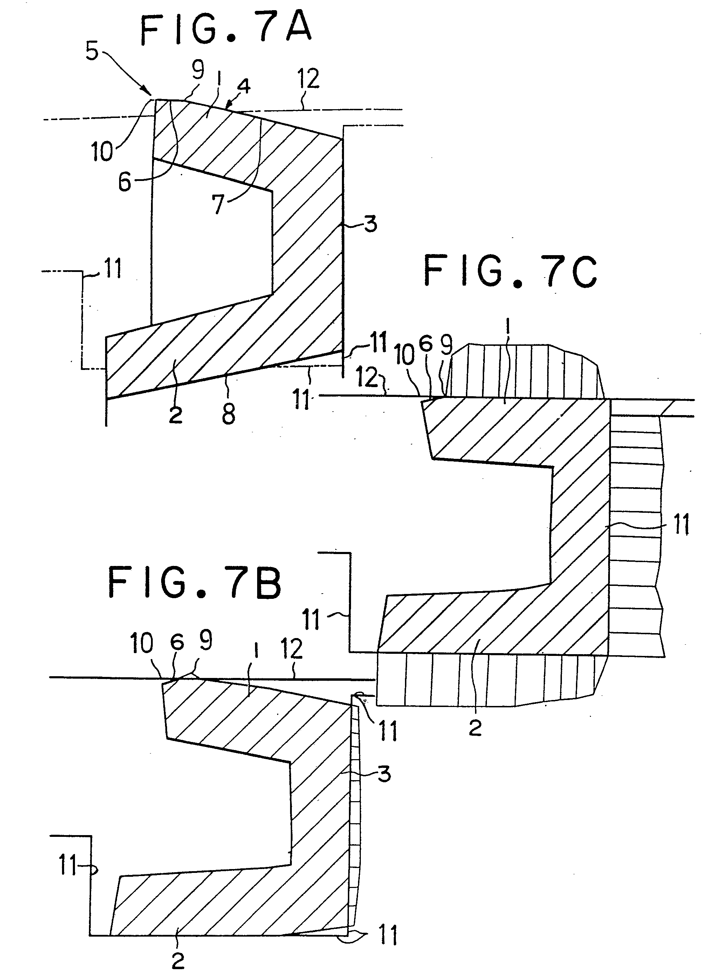

Referring now to Fig. 5, a piston cup of the invention comprises an outer lip 1 with an outer sealing surface 4 at its leading end 5 with an inclined portion 6. The angle $\alpha$ of the inclined portion 6 relative to the axis parallel to the cylinder axis is smaller when unmounted than the angle $\theta$ of the remaining portion of the sealing surface to the said axis, its value being determined as $1° \leqq \alpha \leqq 15°$. On the sealing surface 4 the tip 9 is at a position where the outer diameter of the piston cup is larger than the inner diameter of the cylinder. When the piston cup of Fig. 5 is installed between the piston 11 and the cylinder 12 as seen in Fig. 6, the inclined portion 6 will be inclined in relation to the cylinder wall with a relatively small angle.

Accordingly, a flash free and smooth wedge-shaped clearance is constituted between the inclined portion 6 and the cylinder wall to form an oil film therebetween when the piston cup slides on the cylinder wall. As a consequence, the slide resistance of the cup will be decreased to realize various advantages such as a stable movement of the piston, improvement in the pressure increasing efficiency, and improvement in the durability of the cup.

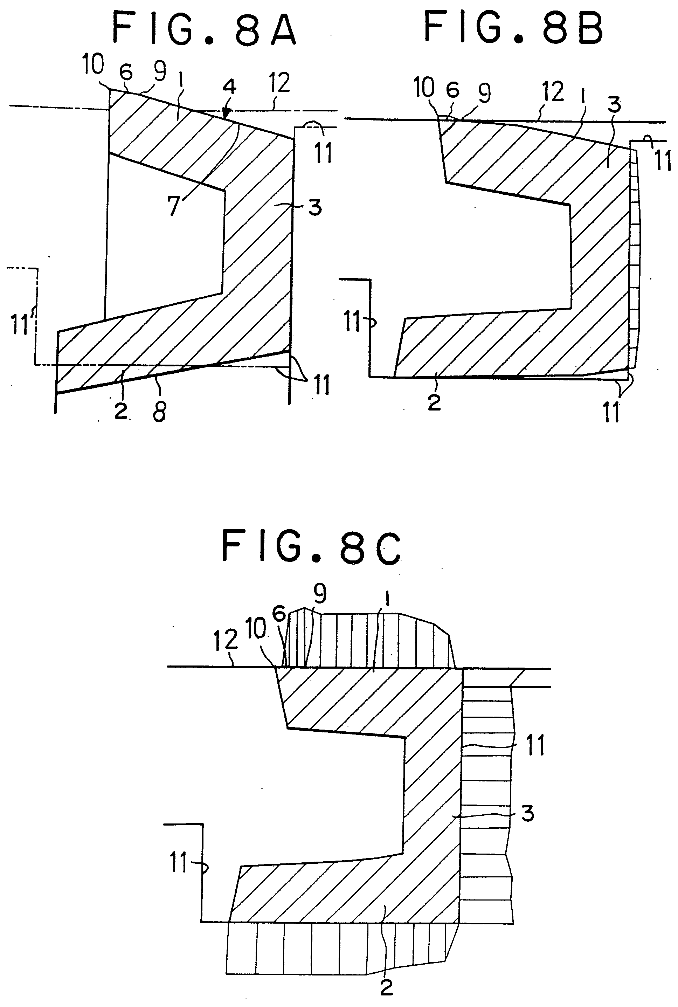

The change of the cup shape when the cup is installed in the cylinder due to the change of the angle $\alpha$ of Fig. 5 is analized with the condition of $\theta = 15°$ and $\alpha = 5°$ (Figs. 7(A)—7(C)) or $\alpha = 10°$ (Figs. 8(A)—8(C)).

The piston cup of Fig. 7(A) comprises an inner sealing surface 8 at the inner lip 2 which includes a portion smaller in diameter than the outer diameter of the piston and the outer sealing surface 4 at the outer lip 1 which includes a portion larger in diameter than the inner diameter of the cylinder. Consequently, the piston cup receives bending force at the inner lip 2 thereof and at the outer lip 1 thereof when installed within the cylinder 12 as shown in Fig. 7(B). The sealing pressure of the cup in contact with the cylinder 12 and the piston 11 is illustrated in Fig. 7C. Fig. 7(B) shows that the leading edge 10 of the outer lip 1 is being apart from the cylinder wall. When the inner pressure of 200 N/cm² (20 kg/cm²) is applied to the cup, it will be clearly apparent from the pressure distribution shown at the upper part of Fig. 7(C) that the inclined portion 6 from the Tip 9 to the edge 10 is apart from the cylinder wall 12.

Similarly, Fig. 8(B) shows that the leading edge 10 is in contact with the cylinder wall when the piston cup is installed and Fig. 8(C) shows that when the inner pressure is applied the leading edge is apart from the cylinder wall and the pressure at a portion of the edge is below the inner pressure.

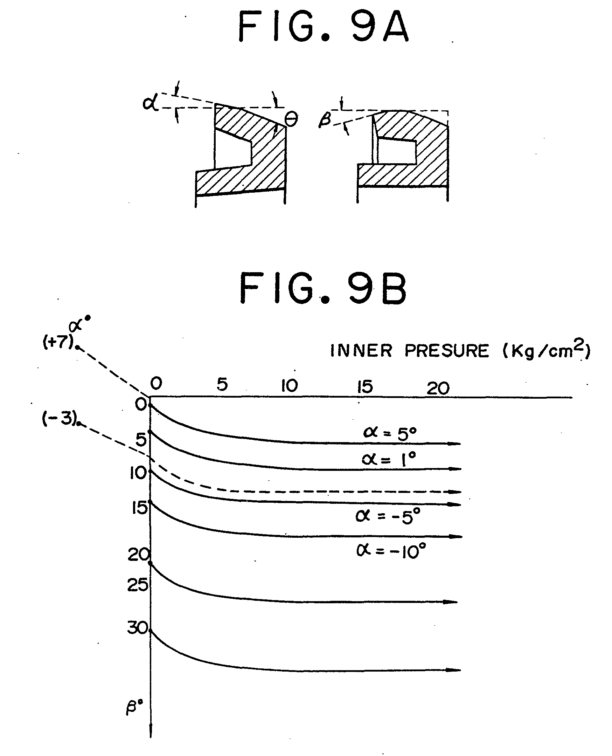

It should be understood in Fig. 9(B) that the angle $\alpha$ be equal to or below 10° so as to release inclined portion of the lip from the cylinder in an effective way.

The fluid wedge operation of the piston cup having the inclination angle $\beta$ (Fig. 9(A)) when mounted has been proved effective in the fluid lubrication theory, i.e. the minimum thickness of the fluid film should be a few microns to dozens of microns in order to realize the fluid wedge operation in the most effective way, so that the inclination angle $\beta$ is a few degrees. In order to make the inclination angle $\beta$ a few degrees when the piston cup is fitted in the cylinder, the angle $\alpha$ preferably be designed as $1° \leqq \alpha \leqq 7°$ from Fig. 9(B). It is to be noted in Fig. 9(B) that the angle $\alpha$ may be designed as $1° < \alpha < 10°$ in order to accomplish the fluid wedge effect.

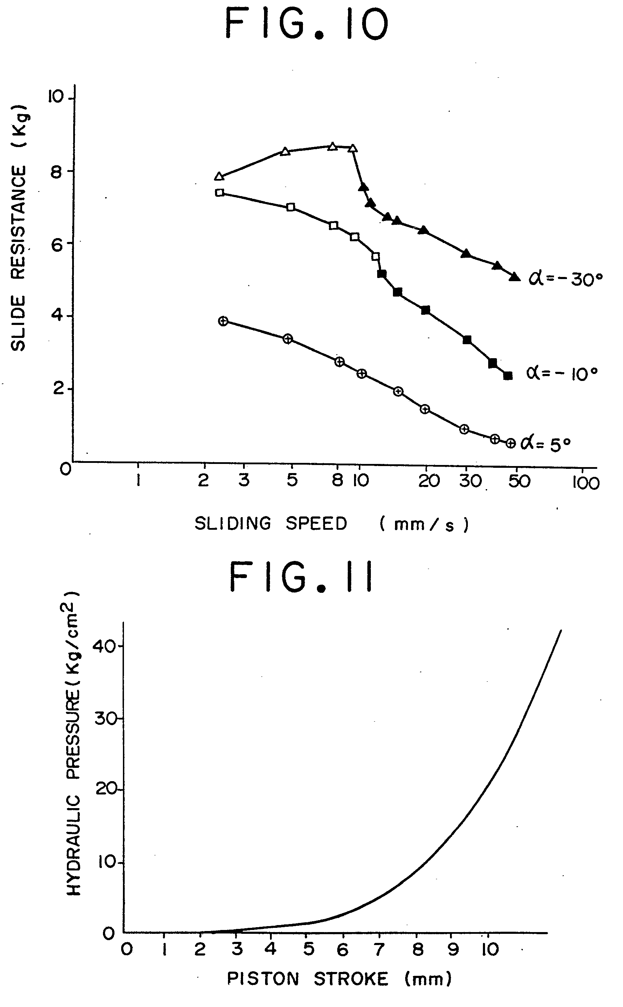

Fig. 10 shows the test results of slide resistance with the angle $\alpha$ being different —30°, —10°, and 5° when the length l of the inclined portion 6 is nearly equal to $0.15 \times L$ (L: length of the sealing surface 4) and the angle $\theta$ is 15°.

In the case of $\alpha = -30°$ as in the conventional Opel type cup, the fluid wedge operation is little expected because the leading edge is far apart from the cylinder, and the slide resistance is relatively large. In the case of the angle $\alpha = 1°$ or $5°$, the resistance is gradually decreased in accordance with the increase of the speed and the fluid wedge operation will be expected in the case of $\alpha = 5°$. Particularly when the angle $\alpha$ is $5°$ to realize the wedge operation in the most effective way as seen in Fig. 9(B), the slide resistance is smaller than that of the case of the angle $\alpha = 1°$.

The applicants have found also that the piston cup of the above-mentioned construction is very advantageous for use in the brake cylinder of automotive vehicles.

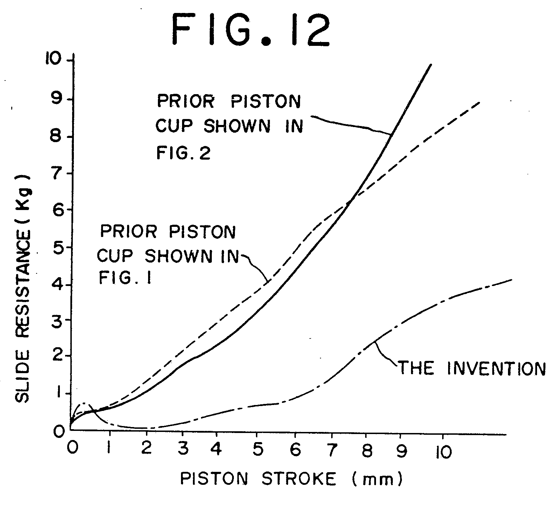

The pressure applied within the piston cup increases in accordance with the piston stroke as seen in Fig. 11. Fig. 12 shows the slide resistance of the piston cup of the invention ($\le = 5°$) in comparison with the conventional piston cups shown in Figs. 1 and 2, and proves the piston cup of the invention has far superior results.

Although the above explanation is based on the inclination angle $\theta = 15°$, the angle $\theta$ may be varied within the range of $10° \le 0 \le 30°$. In consideration of such range of the angle $\theta$, the angle $\alpha$ of the inclined portion may be $1° \le \alpha \le 15°$ so as to realize the fluid wedge effect.

To summarize the above explanation, the positive limit of the angle range should be $\alpha = \frac{1}{2}\theta$ in order to realize the wedge effect in the most effective way, although the wedge effect may be expected to be best when $\alpha = \frac{2}{5}\theta$.

The minimum limit of the angle range should be $\alpha \ge 1°$ and the decrease of the angle $\alpha$ (the increase of the absolute value of the angle $\alpha$) will not realize the fluid wedge effect.

The major factors for accomplishing the fluid wedge operation are the angle, the shape, and the size of the clearance formed between the inclined portion of the piston cup and the cylinder (or the piston) when the cup is installed between the cylinder and the piston. The shape and the size of the clearance are primarily determined by the angle of the inclined portion 6 of the lip and the pressure applied to the inside of cup, and secondarily by the tightening clearance of the cup, and the shape and the elasticity of the portion other than the inclined portion thereof. After the tests and the analysis of these factors, the applicants found that the range of $1° \le \alpha \le 15°$ is the most effective.

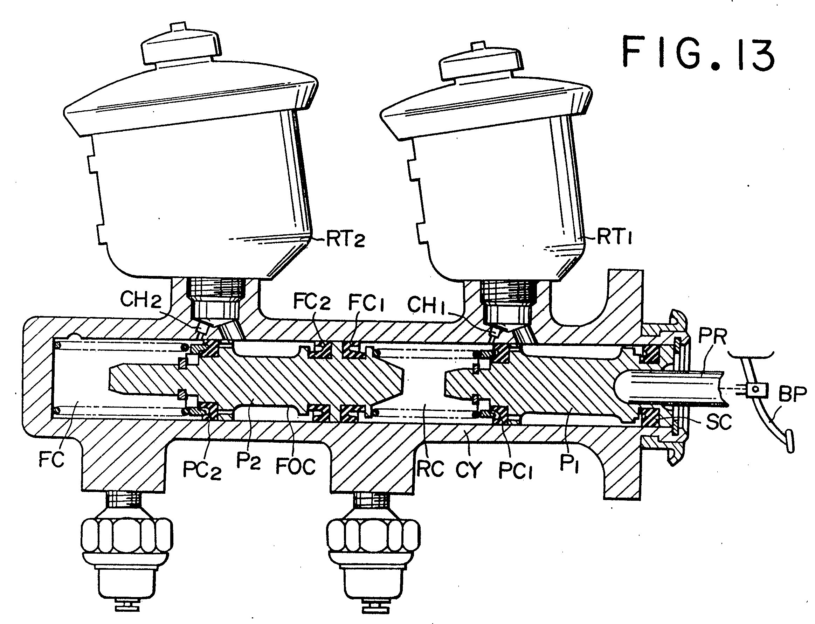

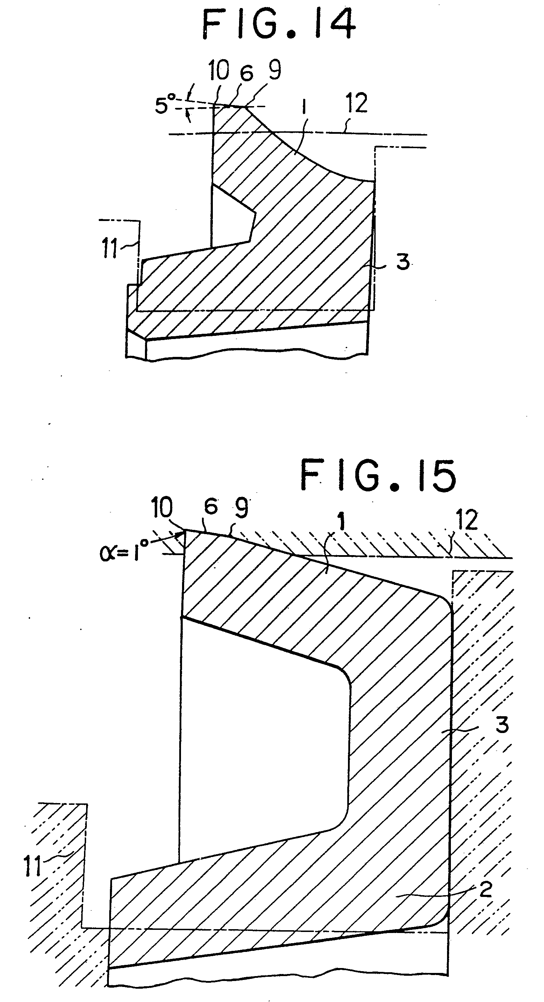

Figs. 13 and 14 show the piston cup of the invention which is being used as secondary cup of the brake device. At first the brake master cylinder will be explained with reference to Fig. 13.

The tandem master cylinder $CY$ comprises a first piston $P1$ and a second piston $P2$ each slidably fitted therein. The first piston $P1$ is provided with a secondary cup $SC$ and a primary cup $PC1$. Similarly, the second piston $P2$ is provided with a primary cup $PC2$ and floating cups $FC1$ and $FC2$. When a brake pedal $BP$ is depressed to push a rod $PR$, the primary cup $PC1$ is moved left in unison with the first piston $P1$ to close a compensation hole $CH1$ which is in fluid communication with a reservoir tank $RT1$.

Thus, a fluid chamber $RC$ of the rear wheel side is pressurized. The second piston $P2$ is also moved left due to pressure in the chamber $RC$ so that the primary cup $PC2$ closes a compensation hole $CH2$, fluidically connected to a reservoir tank $RT2$ thereby pressurizing fluid chamber $FC$ of the front wheel side.

The secondary cup $SC$ mounted on the first piston $P1$ serves to seal between the inside of the cylinder $CY$ and the outside thereof. The primary cups $PC1$ and $PC2$ of the pistons $P1$ and $P2$ serve to receive the fluid pressure. The floating cups $FC1$ and $FC2$ serve to seal between the rear side chamber $RC$ and the front side chamber $FC$.

The secondary cup $SC$ comprises an outer lip 1 having an unbroken curve at the outer periphery thereof, and an inclined portion 6 at the end thereof. The inclined portion 6 has an inclination angle $5°$ with respect to the line passing a point 9 and being parallel to the cylinder axis. When the cup is moved the wedge-shaped clearance is formed between the cylinder wall and the inclined portion of the cup so as to admit the fluid therein. Therefore, the slide resistance is decreased due to the oil film produced on the cylinder wall.

Fig. 15 shows the piston cup of the invention which is used as a primary cup of the brake device.

The primary cup comprises an inclined portion 6 on its outer lip 1 (the angle $\alpha$ of the inclined portion is $1°$). The wedge-shaped clearance is similarly formed upon sliding movement of the primary cup so as to decrease the slide resistance.

The piston cup of the invention may be used as primary cup of the clutch device.

It should be noted that modifications of the invention are possible as long as the angle $\alpha$ of inclined portion with respect to the cylinder axis is $1° \le \alpha \le 15°$. For instance, the piston cup of the invention may be employed in a proportioning valve device which will increase the wheel brake pressure with a reduced ratio relative to the master brake pressure. There are two kinds of the piston cup used in the proportioning valve device; in one of which the outer lip of the cup slides with respect to the inner wall of cylinder and in the other of which the inner lip of the cup slides with respect to the outer wall of the piston. The applicants of the invention have found that the inclined portion angle $\alpha$ of any cup should be $1° \le \alpha \le 15°$ so as to effect the fluid wedge operation in the most effective way. Otherwise, the angle $\alpha$ of the cup may be

$1° \leqq \alpha \leqq 7°$ in consideration of the inner pressure applied thereto and the tightening clearance thereof.

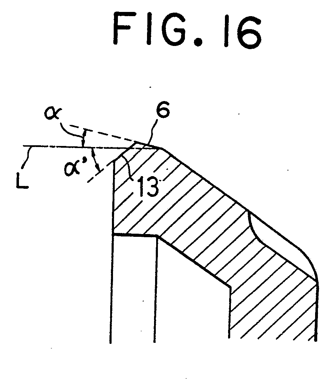

Fig. 16 shows a modified embodiment of the present invention in which a chamfered surface 13 is provided on the inclined portion of the sealing cup. The surface 13 is inclined with respect to a line (L) in the direction opposite to the inclination indicated by $\alpha$ and such the inclination is designated by $\alpha'$ in Fig. 16. It is noted that the surface 7 is inclined in a way that the rim thereof is apart from the wall when mounted where the sealing cup is slidably contacted. The angle $(\alpha')$ is selected from the range of 0° to 45°. The preferable range of the angle $(\alpha')$ is 15° to 45°.

By the provision of the angle $\alpha'$, it is possible to avoid the objectionable adhesion of the inclined portion of the piston cup to the cylinder wall which may be caused due to the manufacturing error of the angle $\alpha$, the expansion or the thermal deformation of the cup during use thereof, and the frictional force on the cup during sliding movement thereof.

## Claims

1. A sealing cup for a hydraulic piston-cylinder device in which the seal is moved with its hollow side during the work stroke of the device towards the fluid contained in the cylinder and comprises the following features:

an annular body of a resilient material including

an annular base (3)

an annular inner sealing lip (2) extending from said annular base, and having an inwardly inclined inner sealing surface (8) adapted to be engaged with a wall to be sealed.

an annular outer sealing lip (1) extending from said annular base (3) so as to encircle said inner sealing lip (2) in spaced relation therewith, and having an outwardly inclined outer sealing surface (4) adapted to be engaged with a wall surface to be sealed,

one of said inner and outer sealing surfaces being slidably movable with respect to corresponding one of said piston (11) and cylinder walls (12), and

an at its leading edge (10) flash free and smooth annular inclined portion (6) being provided at the leading portion (5) on at least one of said sealing surfaces (4, 8) and extending circumferentially, characterized in that for reducing the slide resistance the angle $\alpha$ of said annular inclined portion (6) with respect to the axis of said cylinder (12) is smaller than the angle $\theta$ of the other part of said sealing surface (4) with respect to said axis and is predetermined as follows:

$$1° \leqq \alpha \leqq 15°$$

whereby, on mounting said cup between said cylinder and piston, said inclined portion (6) is inclined to form a wedge-shaped clearance and guides the fluid such as oil to the sliding surface of said one of said cylinder and piston.

2. A sealing cup for a hydraulic piston-cylinder device in accordance with claim 1, characterized in that a chamfered surface (13) is provided at the leading edge of said inclined portion (6) the angle $\alpha'$ of said chamfered surface portion (13) with respect to the axis of said cylinder being negative relative to the angle $\alpha$ of said inclined portion (6) with respect to that and being larger than that of said inclined portion, said angle $\alpha'$ being predetermined as follows:

$$-15° < \alpha' \leqq -45°$$

3. A sealing cup for a hydraulic piston-cylinder device in accordance with claim 1, characterized in that said angle $\alpha$ of said annular inclined portion (6) is predetermined as follows:

$$1° \leqq \alpha < 7°$$

4. A sealing cup for a hydraulic piston-cylinder device in accordance with claim 1, characterized in that said angle $\alpha$ of said annular inclined portion (6) has a following relation to said angle $\theta$ of the other part (7) of said annular inner and/or outer sealing surfaces with respect to the axis of said cylinder,

$$\alpha \leqq 2/3 \, \theta$$

5. A sealing cup for a hydraulic piston-cylinder device in accordance with claim 2, characterized in that said angle $\alpha'$ of said chamfered surface (13) is predetermined as follows:

$$\alpha' = -30°$$

6. A sealing cup for a hydraulic piston-cylinder device in accordance with claim 2, characterized in that the angle $\alpha$ of said annular inclined portion (6) is 5° and the angle $\alpha'$ of said chamfered surface (13) is -30°.

## Revendications

1. Cuvette d'etanchéité pour dispositif hydraulique à piston et cylindre dans lequel le joint est déplacé pendant la course de travail du dispositif avec son côté creux vers le fluide contenu dans le cylindre comportant les parties suivantes:

— un corps annulaire en matériau élastique comprenant

— une base annulaire,

— une lèvre d'étanchéité annulaire interne (2) partant de ladite base annulaire et pourvue d'une surface d'étanchéité interne (8), inclinée vers l'intérieur, destinée à coopérer avec une paroi à rendre étanche, et

— une lèvre d'étanchéité externe (1) annulaire partant de ladite base annulaire (3) de manière à encercler ladite lèvre d'étanchéité interne (2) à une certaine distance de celle-ci et pourvue d'une surface d'étanchéité externe (4), inclinée vers l'extérieur, destinée à coopérer avec la surface d'une paroi à rendre étanche,

l'une desdites surfaces d'étanchéité interne et externe pouvant se déplacer en coulissant par rapport à l'une des parois correspondantes dudit piston (11) et dudit cylindre (12), et une partie annulaire inclinée (6) dont le bord de tête est lisse et sans bavure, étant prévue au bord de tête de la partie avant (5) d'au moins l'une desdites surfaces d'étanchéité (4, 8) et s'étendant circonférentiellement, caractérisée en ce que pour réduire la résistance au glissement l'angle $\alpha$ formé par ladite partie annulaire inclinée (6) avec l'axe du cylindre est plus faible que l'angle $\theta$ formé par l'autre partie de ladite surface d'étanchéité (4) avec ledit axe et est prédéterminé comme suit:

$$1° \leqq \alpha \leqq 15°$$

grâce à quoi, lorsqu'on monte la cuvette entre le cylindre et le piston, ladite partie inclinée (6) est inclinée pour former un espace en forme de coin et guide le fluide tel que de l'huile sur une surface de glissement de l'un desdits piston et cylindre.

2. Cuvette d'étanchéité pour dispositif hydraulique à piston et cylindre selon la revendication 1, caractérisée en ce qu'une surface chanfreinée (13) est prévue sur le bord de tête de ladite partie inclinée (6), l'angle $\alpha'$ formé par ladite partie de surface chanfreinée (13) et l'axe dudit cylindre étant négatif par rapport à l'angle $\alpha$ formé par ladite partie inclinée (6) et ledit axe et étant plus important que celui de ladite partie inclinée, ledit angle $\alpha'$ étant prédéterminé comme suit:

$$-15° < \alpha' \leqq -45°$$

3. Cuvette d'étanchéité pour dispositif hydraulique à piston et cylindre selon la revendication 1, caractérisée en ce que ledit angle $\alpha$ de ladite partie annulaire inclinée (6) est prédéterminé comme suit:

$$1° \leqq \alpha < 7°$$

4. Cuvette d'étanchéité pour dispositif hydraulique à piston et cylindre selon la revendication 1, caractérisée en ce que ledit angle $\alpha$ de ladite partie annulaire inclinée (6) forme avec l'angle $\theta$ de l'autre partie (7) desdites surfaces d'étanchéité annulaires interne et/ou externe par rapport à l'axe dudit cylindre la relation suivante:

$$\alpha \leqq 2/3 \theta$$

5. Cuvette d'étanchéité pour dispositif hydraulique à piston et cylindre selon la revendication 2, caractérisée en ce que ledit angle $\alpha'$ de ladite surface chanfreinée (13) est prédéterminé comme suit:

$$\alpha' = -30°$$

6. Cuvette d'étanchéité pour dispositif hydraulique à piston et cylindre selon la revendication 2, caractérisée en ce que l'angle $\alpha$ de ladite partie annulaire inclinée (6) est de 5° et l'angle $\alpha'$ de ladite surface chanfreinée (13) est de −30°.

**Patentansprüche**

1. Dichtungsring für eine hydraulische Vorrichtung mit Kolben und Zylinder, bei der die Dichtung mit ihrer hohlen Seite beim Arbeitshub der Vorrichtung in Richtung auf das im Zylinder enthaltene Fluid bewegt wird und der die folgenden Merkmale besitzt:

Einen Ringkörper aus nachgiebigem Material mit einer Kreisringbasis (3),

eine von der Kreisringbasis vorstehende ringförmige innere Dichtungslippe (2), die eine nach innen geneigte innere Dichtungsfläche (8) hat, die sich an eine abzudichtende Wandung anlegen kann und

eine von der Kreisringbasis (3) vorstehende ringförmige, die innere Dichtungslippe (2) im Abstand umgebene äußere Dichtungslippe (1), die eine äußere Dichtungsfläche (4) hat, die mit einer abzudichtenden Wandoberfläche zusammenwirken kann, wobei von der inneren und äußeren Dichtungsfläche eine gegenüber der entsprechenden Kolben- (11) bzw. Zylinderwand (12) verschiebbar ist, und

einen an einem Vorderende der ringförmigen inneren und/oder äußeren Dichtungsfläche (4; 8) vorgesehenen ringförmigen geneigten Abschnitt (6), der an seiner Vorderkante gratfrei und eben ist und sich in Umfangsrichtung erstreckt, dadurch gekennzeichnet, daß der Winkel $\alpha$ des ringförmigen geneigten Abschnitts (6) gegen die Achse des Zylinders (12) kleiner als der Winkel $\theta$ des anderen Abschnitts der zugeordneten Dichtungsfläche (4) zur Achse ist und wie folgt festgelegt ist:

$$1° \leqq \alpha \leqq 15°,$$

wobei nach Einbau des Dichtungsringes zwischen dem Zylinder und dem Kolben der geneigte Abschnitt (6) so geneigt ist, daß er einen keilförmigen Freiraum bildet und Fluid, wie z. B. Öl, an eine Gleitfläche von mindestens dem Zylinder oder dem Kolben leitet.

2. Dichtungsring nach Anspruch 1, dadurch gekennzeichnet, daß an dem Vorderende des geneigten Abschnitts (6) eine Schrägfläche (13) vorgesehen ist, deren Winkel $\alpha'$ gegen die

Zylinderachse negativ zu dem Winkel $\alpha$ des geneigten Abschnitts (6) und größer als derjenige des geneigten Abschnitts ist, und wie folgt festgelegt ist:

$$-15° < \alpha' \leqq -45°.$$

3. Dichtungsring nach Anspruch 1, dadurch gekennzeichnet, daß der Winkel $\alpha$ des ringförmigen geneigten Abschnitts (6) wie folgt festgelegt ist:

$$1° \leqq \alpha < 7°.$$

4. Dichtungsring nach Anspruch 1, dadurch gekennzeichnet, daß der Winkel $\alpha$ des ringförmigen geneigten Abschnitts (6) zu dem

Winkel $\theta$ des anderen Abschnitts (7) der ringförmigen inneren und/oder äußeren Dichtungsfläche gegenüber der Zylinderachse im folgenden Verhältnis steht:

$$\alpha \leqq 2/3 \, \theta.$$

5. Dichtungsring nach Anspruch 2, dadurch gekennzeichnet, daß der Winkel $\alpha'$ der Schrägfläche (13) wie folgt festgelegt ist:

$$\alpha' = -30°.$$

6. Dichtungsring nach Anspruch 2, dadurch gekennzeichnet, daß der Winkel $\alpha$ des ringförmigen geneigten Abschnitts (6) 5° und der Winkel $\alpha'$ der Schrägfläche (13) −30° beträgt.

0 000 517

## FIG. 1
PRIOR ART

## FIG. 2
PRIOR ART

## FIG. 3
PRIOR ART

## FIG. 4
PRIOR ART

## FIG. 5

## FIG. 6

1

FIG. 7A

FIG. 7C

FIG. 7B

0 000 517

# FIG. 8A

# FIG. 8B

# FIG. 8C

3

0 000 517

# FIG. 9A

# FIG. 9B

INNER PRESURE $(Kg/cm^2)$

$\alpha = 5°$

$\alpha = 1°$

$\alpha = -5°$

$\alpha = -10°$

4

0 000 517

FIG. 10

FIG. 11

5

# F I G . 12

FIG.13

0 000 517

# F I G . 14

# F I G . 15

# FIG. 16